# EUROPEAN PATENT SPECIFICATION

(11) **EP 3 989 074 B1**
(45) Date of publication and mention of the grant of the patent: **23.08.2023**
(21) Application number: 20306242.7
(22) Date of filing: 20.10.2020
(51) Int. Cl.: G06F 12/0871, G06F 16/172, G06F 16/14

(54) **METHOD FOR OPTIMIZING EXECUTION OF HIGH-PERFORMANCE COMPUTING WORKFLOWS**
VERFAHREN ZUR OPTIMIERUNG DER AUSFÜHRUNG VON LEISTUNGSFÄHIGEN RECHENARBEITSABLÄUFEN
PROCÉDÉ D'OPTIMISATION DE L'EXÉCUTION DE FLUX DE TRAVAIL DE CALCUL HAUTE PERFORMANCE

(43) Date of publication of application: 27.04.2022
(73) Proprietor: Bull SAS, 78340 Les Clayes-sous-Bois (FR)
(72) Inventor: COUVÉE, Philippe, 38190 Villard Bonnot (FR); MIMOUNI, Salim, 38100 Grenoble (FR); ROBERT, Sophie, 38190 Les Adrets (FR); VINCENT, Lionel, 38130 Echirolles (FR)
(74) Representative: Cabinet Camus Lebkiri

(56) References cited:
- EP-A1- 2 606 431
- US-A- 6 163 773

## Description

### TECHNICAL FIELD

The technical field of the invention is the one of high-performance computing systems and more particularly the one of high-performance computing workflows executed on high-performance computing systems.

The present invention relates to a method for optimizing the execution of high-performance computing workflows, a system and a computer program product to implement the method.

### BACKGROUND OF THE INVENTION

High-performance computing systems or HPC systems comprise many compute nodes on which applications are running on. These applications are part of workflows and convey data accessed from files stored in a storage subsystem of the HPC system.

To improve the performance in terms of bandwidth and latency of the applications, it is known to place the accessed files in a file cache subsystem of the HPC system. However, the file cache subsystem typically has limited resources to store data and most of the time cannot handle the entire dataset manipulated by large HPC workflows.

Usually, the user is supposed to have a priori knowledge on the workflows and decides when and where and which file should be placed in the file cache subsystem with highest priority. However, considering the number of files accessed by a given workflow, it is very difficult for a user to place them optimally taking into account the filling rate of the file cache subsystem. That is why in general, the placement is realized in a data-agnostic fashion, for example using a FIFO method for First-In First-Out method or a LIFO method for Last-In First-Out method, which does not maximize applications performance.

There is thus a need to optimize the placement of the files accessed by a given workflow intended to be executed on an HPC system in the file cache subsystem of the HPC system to optimize the performances of the applications comprised in the workflow.

Document US6163773 relates to cache management method performed in a data storage system including a cache management engine coupled to a storage, a dataset access log, and a cache, wherein the cache management engine trains and uses a single output back propagation neural network. The data access log stores information representing a dataset whenever that dataset is accessed by the user. Contents of the data access log expire according to a predefined expiration criteria, such as a certain age. The cache stores datasets according to a predefined use-based criteria, such as every time a dataset is accessed by the user. Cache contents are evaluated by the trained neural network, and groomed accordingly. In response to an event "trigger", such as access of a dataset or expiration of its access log record, the cache management engine prepares training data concerning that dataset. This is achieved by determining past characteristics of the dataset as of various times between the event trigger and the dataset's previous access, and providing the past characteristics as input to train the neural network.

In training the network, the cache management engine provides the neural network with output representing the expired or accessed status of the dataset as of the last event trigger. The cache management engine operates the trained neural network to generate scores for cached datasets, these scores ranking the cached datasets relative to each other. According to this or a different schedule, the cache management engine reviews the scores, identifies one or more datasets with the lowest scores, and purges the identified datasets from the cache.

Furthermore, document EP2606431 discloses a method using a neural network for selecting an appropriate caching algorithm to be used when temporarily storing data accessed by an executing application, whereby the neural network dynamically and/or iteratively replace an initial caching algorithm being used for the application in response to determining that the cache performance and/or overall application performance is unacceptable or has deteriorated.

### SUMMARY OF THE INVENTION

An object of the invention is to provide a method to optimize the execution of a workflow intended to be executed on an HPC system by optimizing the positioning of the files accessed by the workflow in the file cache subsystem of the HPC system.

To this end, according to a first aspect of the invention, it is provided a method for optimizing the execution of high-performance computing workflows intended to be executed on a high-performance computing system comprising at least one file cache subsystem associated with a filling state and a storage subsystem, each workflow being associated with at least one file stored in the storage subsystem, on which the workflow performs operations, the method comprising the following steps:
- For each workflow intended to be executed:
   ∘For each file associated with the workflow:
      - Collection of first features relative to the file and/or to the operations the workflow performs on the file, to obtain a signature for the file;
   ∘If a condition according to which the workflow is not associated with a workflow lifecycle model is verified:
      - For each file associated with the workflow:
         ▪ Collection of second features relative to the access operations the workflow performs on the file, to obtain a file lifecycle;
      - Building and supervised training of a workflow lifecycle model on the signature and the file lifecycle obtained for each file associated with the workflow, to predict a file lifecycle from the corresponding signature, a workflow lifecycle comprising each predicted file lifecycle;
      - Association of the trained workflow lifecycle model with the workflow;
   ∘Use of the trained workflow lifecycle model associated with the workflow to obtain a workflow lifecycle for the workflow;
   ∘Use of an optimization model to obtain policies for placement of each file associated with the workflow in at least one file cache subsystem from the obtained workflow lifecycle and the filling state of each file cache subsystem;
   each file associated with the workflow being placed in at least one file cache subsystem according to the obtained policies for the execution of the workflow.

Thanks to the invention, a model is trained to learn the lifecycle of each file accessed by the high-performance computing workflow, and then used to determine via an optimization model, when and where each file should be positioned in the file cache subsystem according to its filling rate, and when it should be moved and/or removed, in order to optimize the execution of the workflow.

A signature is calculated for each file associated with the workflow to identify it uniquely so that the method is independent of the names of the files that can be modified. A new workflow lifecycle model is only trained for a workflow which is not associated with a previously trained workflow lifecycle model. Thus, as it is very common for HPC systems to have several repetitions of a same workflow, only one workflow lifecycle model is trained for all the repetitions of a same workflow, which limits calculation times and storage resources used.

Apart from the characteristics mentioned above in the previous paragraph, the method according to a first aspect of the invention may have one or several complementary characteristics among the following characteristics considered individually or in any technically possible combinations.

According to a variant of the invention, the first features comprise at least one of the following features:
- file size;
- number of workflow operations performed on the file;
- data block size of the file and/or duration of the operation and/or type of access for reading and/or writing workflow operations on the file.

According to a variant of the invention compatible with the previous variant, the second features comprise at least one of the following features: number of opening and/or closing workflow operations, duration of use of the file.

According to a variant of the invention compatible with the previous variants, if the workflow is associated with a workflow lifecycle model, it further comprises a step of updating the workflow lifecycle model.

A workflow lifecycle model associated with a given workflow is thus trained on all the previous executions of the workflow.

According to a variant of the invention compatible with the previous variants, the workflow lifecycle model is an artificial neural network, or an encoder.

According to a variant of the invention compatible with the previous variants, the building of the workflow lifecycle model is iterative.

According to a variant of the invention compatible with the previous variants, the optimization model is based on optimization under constraint.

According to a second aspect of the invention, it is provided a system comprising:
- A high-performance computing system including at least one compute node configured to execute high-performance computing workflows, at least one file cache subsystem and a storage subsystem configured to store files on which workflows perform operations;
- A computer configured to implement the method according to the first aspect of the invention.

According to a variant of the invention, the computer is aside the high-performance computing system.

The invention can thus be implemented on an existing HPC system.

According to a third aspect of the invention, it is provided a computer program product comprising instructions which, when the program is executed by a computer, cause the computer to carry out the steps of the method according to the first aspect of the invention.

The invention and its various applications will be better understood by reading the following description and examining the accompanying figures.

### BRIEF DESCRIPTION OF THE FIGURES

The figures are presented for information purposes only and in no way limit the invention.
- Figure 1 is a flow chart of the method of the invention.
- Figure 2 schematically represents the system of the invention.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

A first aspect of the invention relates to a method for optimizing the execution of high-performance computing workflows intended to be executed on a high-performance computing system or HPC system.

By "a high-performance computing workflow" is meant a sequence of operations to be executed on an HPC system.

A high-performance computing workflow comprises at least one application which conveys data located in at least one file stored in the HPC system.

A high-performance computing workflow is associated with each file through which it accesses to data to be conveyed, that is on which it performs operations. For example, to read, respectively write, a given data block in a file, a workflow classically performs on the file an opening operation, a reading, respectively writing, operation of the given data block, and then a closing operation.

A simplified example of high-performance computing workflow comprising three applications, application1, application2 and application3, and being associated with three files, file1, file2 and file3 is for example:
Creation of file1 by application1
Creation of file2 by application2
Reading of file3 by applications
Reading of file1 by applications
Deletion of file1 by applications

By "optimizing the execution of a high-performance computing workflow" is meant to optimize the performance in terms of bandwidth and latency of each application comprised in the high-performance computing workflow.

In the remainder of the description, the terms "high-performance computing workflow" and "workflow" will be used interchangeably.

A second aspect of the invention relates to a system enabling the method of the invention to be implemented.

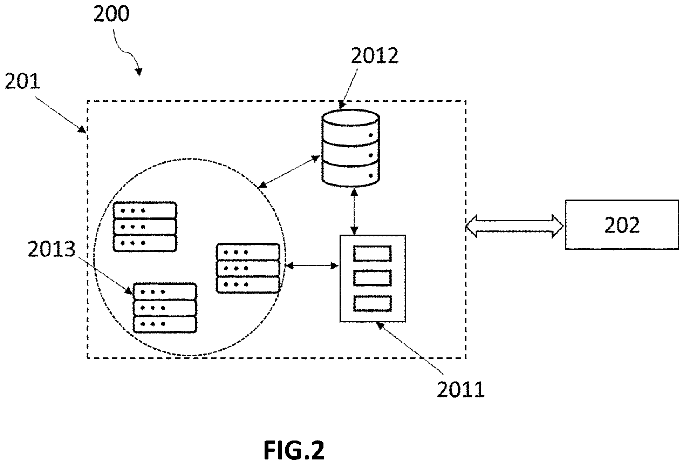

The system 200 of the invention is schematically represented in figure 2.

The system 200 of the invention comprises the HPC system 201 on which the workflow is intended to be executed.

The HPC system 201 includes:
- At least one compute node 2013 configured to execute high-performance computing workflows;
- At least one file cache subsystem 2011;
- A storage subsystem 2012 configured to store the files through which running workflows access to data to be conveyed.

By « file cache subsystem » is classically meant a memory or a part of memory in which the most frequently or recently used files are temporarily stored and which can be used to reduce response times.

The file cache subsystem 2011 is associated with a filling state representing its filling rate.

The system 200 of the invention also comprises a computer 202 configured to implement the steps of the method of the invention.

In a first embodiment represented in figure 2, the computer 202 is aside the HPC system 201 and exchanges information via a wired or a wireless link with the HPC system 201, to implement the method of the invention.

In a second embodiment, the computer 202 is comprised in the HPC system 201.

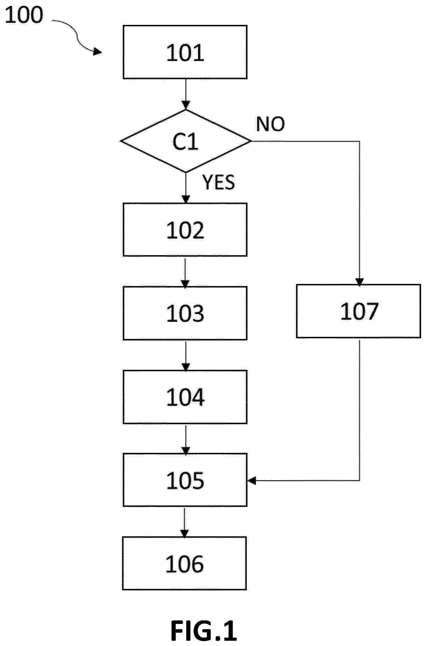

The sequence of the steps of the method 100 of the invention is represented in figure 1.

The following steps of the method 100 are performed for each workflow whose execution is to be optimized by the method 100, that is each workflow intended to be executed by the HPC system 201.

Each workflow could be associated with a workflow identifier being, for example a number. The workflow identifier is for example stored in a memory of the computer 202.

A first step 101 of the method 100 consists in collecting first features for each file associated with the workflow.

The first features can be relative to the file, for example the file size, and/or to the operations performed by the workflow on the file, for example the number of operations the workflow performs on the file, and/or for reading and/or writing operations, data block size and/or duration of the operation and/or type of access. The type of access can be sequential, that is the data blocks read and/or write during successive reading and/or writing operations follow each other, or random.

The set of collected first features are then used to obtain a signature for the file. The signature is for example the list of the collected first features.

If a condition C1 according to which the workflow is not associated with a workflow lifecycle model is verified, a second step 102 of the method 100 is realized. Otherwise, that is if the workflow is associated with a workflow lifecycle model, a fifth step 105 of the method 100 is realized.

The second step 102 of the method 100 consists in collecting second features for each file associated with the workflow.

The second features are relative to the access operations performed by the workflow on the file, for example the number of opening and/or closing operations the workflow performs on the file, and/or the duration of use of the file.

By "duration of use of a file" is meant the duration between the opening of the file and the closing of the file.

The set of collected second features are then used to obtain a file lifecycle for the file.

For the simplified example of workflow previously mentioned, a simplified file lifecycle for file1 is for example:
Open file1 for creation
Write data to file 1
Close file 1 after 2 ms
Open file1 for reading
Read data from file 1
Close file 1 after 5 ms
Delete file 1

A third step 103 of the method 100 consists in building and training a workflow lifecycle model for the workflow.

The workflow lifecycle model is built and trained to predict, for each file associated with a workflow, a file lifecycle from the signature obtained for the file at the first step 101.

A workflow lifecycle of a workflow comprises each file lifecycle predicted by the workflow lifecycle model for the workflow.

The workflow lifecycle model is for example an artificial neural network, or an encoder.

The workflow lifecycle model comprises hyperparameters specific to the structure of the model and not linked to the training, for example for an artificial neural network, the number of layers of the artificial neural network, and the number of neurons by layer, and parameters linked to the training, for example for an artificial neural network, the synaptic coefficients.

The hyperparameters are necessary to build the workflow lifecycle model. Once the workflow lifecycle model is built, it is thus possible to train it.

Training a model consists in updating its parameters to maximize the accuracy of the prediction.

In case of supervised learning, the training database comprises input data and true output data. Training then consists in browsing the training database and, for each input data supplied to the model, updating the parameters of the model using an optimization algorithm to minimize the difference between the output of the model and the true output data associated with the input data in the training database.

The training of the workflow lifecycle model is supervised and realized on a training database comprising the signature of each file associated with the workflow obtained at the first step 101, and the desired corresponding file lifecycle obtained at the second step 102, and the workflow lifecycle model updates its parameters by minimizing the difference between the file lifecycle it predicts for the signature of a given file associated with the workflow of the training database and the corresponding file lifecycle in the training database.

The hyperparameters can be chosen by default or determined iteratively. In this latest case, the third step 103 of building and training a workflow lifecycle model is realized several times for workflow lifecycle models having different hyperparameters and the workflow lifecycle model having the maximal prediction accuracy after training is chosen.

Once trained, the workflow lifecycle model is for example stored in a memory of the computer 202.

A fourth step 104 of the method 100 consists in associating the workflow with the workflow lifecycle model trained at the third step 103.

If the workflow is associated with a workflow identifier, the fourth step 104 can consist in associating the workflow identifier with the trained workflow lifecycle model.

For example, the workflow identifier stored in a memory of the computer 202 is associated with the workflow lifecycle model stored in the same memory of the computer 202.

The fifth step 105 of the method 100 consists in using the workflow lifecycle model associated with the workflow, to get a workflow lifecycle for the workflow intended to be executed, that is to provide as input of the workflow lifecycle model, the signatures obtained for each file associated with the workflow at the first step 101 and to obtain as output the workflow lifecycle of the workflow comprising the file lifecycle of each file associated with the workflow.

The method 100 of the invention can further comprise a seventh step 107 before the sixth step 106 if the condition C1 is not verified, that is if the workflow intended to be executed is associated with a workflow lifecycle model.

The seventh step 107 consists in updating the workflow lifecycle model associated with the workflow intended to be executed, using the signatures obtained for each file associated with the workflow at the first step 101.

For example, the workflow intended to be executed is used to train the workflow lifecycle model, that is the workflow is used to update the parameters of the workflow lifecycle model.

A sixth step 106 of the method 100 consists in using an optimization model to get policies for placement of each file associated with the workflow intended to be executed, in at least one file cache subsystem 2011 of the HPC system 201.

The optimization model is for example based on optimization under constraint. For example, the optimization model aims at minimizing a cost function which has an increasingly higher value as a file is placed high in the file cache subsystem 2011, by following conditional rules, for example if a file is used less than N times by the workflow, it is not placed in the file cache subsystem 2011.

The optimization model uses the workflow lifecycle obtained at the fifth step 105 for the workflow intended to be executed and the filling state of each file cache subsystem 2011 of the HPC system 201.

The placement policies comprise for each file associated with the workflow intended to be executed, the location in one file cache subsystem 2011 where the file has to be stored, the moment when the file has to be stored and the moment when the file has to be deleted from the file cache subsystem 2011. Some file associated with the workflow can not be placed in the file cache subsystem 2011.

Each file associated with the workflow intended to be executed will be placed in at least one file cache subsystem 2011 according to the obtained policies, for the optimized execution of the workflow.

## Claims

1. Method (100) for optimizing the execution of high-performance computing workflows being sequences of operations intended to be executed on a high-performance computing system (201), the high-performance computing system (201) comprising at least one file cache subsystem (2011) associated with a filling state, and a storage subsystem (2012), each workflow being associated with at least one file stored in the storage subsystem (2012), on which the workflow performs operations, **characterized in that** the method (100) comprises the following steps:
- For each workflow intended to be executed:
∘For each file associated with the workflow:
• Collection of first features relative to the file and/or to the operations the workflow performs on the file, to obtain a signature for the file (101);
∘If a condition (C1) according to which the workflow is not associated with a workflow lifecycle model is verified:
• For each file associated with the workflow:
▪ Collection of second features relative to the access operations the workflow performs on the file, to obtain a file lifecycle corresponding to the sequence of operations performed by the workflow on the file (102);
• Building and supervised training of a workflow lifecycle model on the signature and the file lifecycle obtained for each file associated with the workflow, to predict a file lifecycle from the corresponding signature, and thus obtain a workflow lifecycle comprising each predicted file lifecycle (103);
• Association of the trained workflow lifecycle model with the workflow (104);
∘Use of the trained workflow lifecycle model associated with the workflow to obtain a workflow lifecycle for the workflow (105);
∘Use of an optimization model to obtain from the obtained workflow lifecycle and the filling state of each file cache subsystem (2011), policies for placement in at least one file cache subsystem (2011), of each file associated with the workflow (106);
each file associated with the workflow being placed in at least one file cache subsystem (2011) according to the obtained policies, for the execution of the workflow.

2. Method (100) according to claim 1, **characterized in that** the first features comprise at least one of the following features:
- file size;
- number of workflow operations performed on the file;
- data block size of the file and/or duration of the operation and/or type of access, for reading and/or writing workflow operations on the file.

3. Method (100) according to any of the preceding claims, **characterized in that** the second features comprise at least one of the following features: number of opening and/or closing workflow operations, duration of use of the file.

4. Method (100) according to any of the preceding claims, **characterized in that**, if the workflow is associated with a workflow lifecycle model, it further comprises a step (107) of updating the workflow lifecycle model.

5. Method (100) according to any of the preceding claims, **characterized in that** the workflow lifecycle model is an artificial neural network or an encoder.

6. Method (100) according to any of the preceding claims, **characterized in that** the building of the workflow lifecycle model is iterative.

7. Method (100) according to any of the preceding claims, **characterized in that** the optimization model is based on optimization under constraint.

8. System (200) comprising:
- A high-performance computing system (201) including at least one compute node (2013) configured to execute high-performance computing workflows, at least one file cache subsystem (2011) and a storage subsystem (2012) configured to store files on which workflows perform operations;
- A computer (202) configured to implement the method according to any of the preceding claims.

9. System according to claim 8, **characterized in that** the computer (202) is aside the high-performance computing system (201).

10. A computer program product comprising instructions which, when the program is executed by a computer, cause the computer to carry out the steps of the method (100) according to any of claims 1 to 7.

## Patentansprüche

1. Verfahren (100) zum Optimieren der Ausführung von
Hochleistungsrechenarbeitsabläufen, die Sequenzen von Vorgängen sind, die dafür gedacht sind, auf einem Hochleistungsrechensystem (201) ausgeführt zu werden, das Hochleistungsrechensystem (201) umfassend mindestens ein Dateicacheuntersystem (2011), das einem Füllungszustand zugeordnet ist, und ein Speicheruntersystem (2012), wobei jeder Arbeitsablauf mindestens einer Datei zugeordnet ist, die in dem Speicheruntersystem (2012) gespeichert ist, an der der Arbeitsablauf Vorgänge durchführt, **dadurch gekennzeichnet, dass** das Verfahren (100) die folgenden Schritte umfasst:
- für jeden Arbeitsablauf, der dafür gedacht ist, ausgeführt zu werden:
∘ für jede Datei, die dem Arbeitsablauf zugeordnet ist:
• Sammeln von ersten Merkmalen bezüglich der Datei und/oder der Vorgänge, die der Arbeitsablauf an der Datei durchführt, um eine Signatur für die Datei (101) zu erhalten;
∘ falls eine Bedingung (C1), gemäß der der Arbeitsablauf nicht einem Arbeitsablauflebenszyklusmodell zugeordnet ist, verifiziert wird:
• für jede Datei, die dem Arbeitsablauf zugeordnet ist:
▪ Sammeln von zweiten Merkmalen bezüglich der Zugriffsvorgänge, die der Arbeitsablauf an der Datei durchführt, um einen Dateilebenszyklus zu erhalten, der der Sequenz von Vorgängen entspricht, die durch den Arbeitsablauf an der Datei (102) durchgeführt werden;
• Erstellen und überwachtes Trainieren eines Arbeitsablauflebenszyklusmodells an der Signatur und dem Dateilebenszyklus, die für jede Datei, die dem Arbeitsablauf zugeordnet ist, erhalten werden, um einen Dateilebenszyklus von der entsprechenden Signatur vorherzusagen und somit einen Arbeitsablauflebenszyklus, umfassend jeden vorhergesagten Dateilebenszyklus (103), zu erhalten;
• Zuordnen des trainierten Arbeitsablauflebenszyklusmodells zu dem Arbeitsablauf (104);
∘ Verwenden des trainierten Arbeitsablauflebenszyklusmodells, das dem Arbeitsablauf zugeordnet ist, um einen Arbeitsablauflebenszyklus für den Arbeitsablauf (105) zu erhalten;
∘ Verwenden eines Optimierungsmodells, um aus dem erhaltenen Arbeitsablauflebenszyklus und dem Füllungszustand jedes Dateicacheuntersystems (2011) Richtlinien für eine Platzierung in mindestens einem Dateicacheuntersystem (2011) jeder Datei, die dem Arbeitsablauf (106) zugeordnet ist, zu erhalten;
wobei jede Datei, die dem Arbeitsablauf zugeordnet ist, gemäß den erhaltenen Richtlinien für die Ausführung des Arbeitsablaufes in mindestens ein Dateicacheuntersystem (2011) platziert wird.

2. Verfahren (100) nach Anspruch 1, **dadurch gekennzeichnet, dass** die ersten Merkmale mindestens eines der folgenden Merkmale umfassen:
- Dateigröße;
- Anzahl von Arbeitsablaufvorgängen, die an der Datei durchgeführt werden;
- Datenblockgröße der Datei und/oder Dauer des Vorgangs und/oder Zugriffsart zum Lesen und/oder Schreiben von Arbeitsablaufvorgängen auf die Datei.

3. Verfahren (100) nach einem der vorstehenden Ansprüche,
**dadurch gekennzeichnet, dass** die zweiten Merkmale mindestens eines der folgenden Merkmale umfassen: Anzahl von Öffnungs- und/oder Schließarbeitsablaufvorgängen, Nutzungsdauer der Datei.

4. Verfahren (100) nach einem der vorstehenden Ansprüche,
**dadurch gekennzeichnet, dass**, falls der Arbeitsablauf einem Arbeitsablauflebenszyklusmodell zugeordnet ist, es ferner einen Schritt (107) eines Aktualisierens des Arbeitsablauflebenszyklusmodells umfasst.

5. Verfahren (100) nach einem der vorstehenden Ansprüche,
**dadurch gekennzeichnet, dass** das Arbeitsablauflebenszyklusmodell ein künstliches neuronales Netz oder ein Codierer ist.

6. Verfahren (100) nach einem der vorstehenden Ansprüche,
**dadurch gekennzeichnet, dass** das Erstellen des Arbeitsablauflebenszyklusmodells iterativ ist.

7. Verfahren (100) nach einem der vorstehenden Ansprüche,
**dadurch gekennzeichnet, dass** das Optimierungsmodell auf einer Optimierung unter Einschränkung basiert.

8. System (200), umfassend:
- ein Hochleistungsrechensystem (201), das mindestens einen Rechenknoten (2013), der konfiguriert ist, um Hochleistungsrechenarbeitsabläufe auszuführen, mindestens ein Dateicacheuntersystem (2011) und ein Speicheruntersystem (2012) einschließt, das konfiguriert ist, um Dateien zu speichern, an denen Arbeitsabläufe Vorgänge durchführen;
- ein Rechner (202), der konfiguriert ist, um das Verfahren nach einem der vorstehenden Ansprüche zu implementieren.

9. System nach Anspruch 8, **dadurch gekennzeichnet, dass** der Rechner (202) neben dem Hochleistungsrechensystem (201) ist.

10. Rechnerprogrammprodukt, umfassend Anweisungen, die, wenn das Programm durch einen Rechner ausgeführt wird, den Rechner veranlassen, die Schritte des Verfahrens (100) nach einem der Ansprüche 1 bis 7 vorzunehmen.

## Revendications

1. Procédé (100) pour l'optimisation de l'exécution de flux de travail de calcul à haute performance étant des séquences d'opérations prévues pour être exécutées sur un système de calcul haute performance (201), le système de calcul à haute performance (201) comprenant au moins un sous-système de cache de fichier (2011) associé à un état de remplissage, et un sous-système de stockage (2012), chaque flux de travail étant associé à au moins un fichier stocké dans le sous-système de stockage (2012), sur lequel le flux de travail met en oeuvre des opérations, **caractérisé en ce que** le procédé (100) comprend les étapes suivantes :
- Pour chaque flux de travail prévu pour être exécuté :
∘ Pour chaque fichier associé au flux de travail :
• Collecte de premières caractéristiques relatives au fichier et/ou aux opérations que le flux de travail met en oeuvre sur le fichier, pour obtenir une signature pour le fichier (101) ;
∘ Si une condition (C1) selon laquelle le flux de travail n'est pas associé à un modèle de cycle de vie de flux de travail est vérifiée :
• Pour chaque fichier associé au flux de travail :
▪ Collecte de secondes caractéristiques relatives aux opérations d'accès que le flux de travail met en oeuvre sur le fichier, pour obtenir un cycle de vie de fichier correspondant à la séquence d'opérations mise en oeuvre par le flux de travail sur le fichier (102) ;
• Construction et entraînement supervisé d'un modèle de cycle de vie de flux de travail sur la signature et le cycle de vie de fichier obtenu pour chaque fichier associé au flux de travail, pour prédire un cycle de vie de fichier à partir de la signature correspondante, et ainsi obtenir un cycle de vie de flux de travail comprenant chaque cycle de vie de fichier prédit (103) ;
• Association du modèle de cycle de vie de flux de travail entraîné au flux de travail (104) ;
∘ Utilisation du modèle entraîné de cycle de vie de flux de travail associé au flux de travail pour obtenir un cycle de vie de flux de travail pour le flux de travail (105) ;
∘ Utilisation d'un modèle d'optimisation pour obtenir à partir du cycle de vie de flux de travail obtenu et de l'état de remplissage de chaque sous-système de cache de fichier (2011), des règles de mise en place dans au moins un sous-système de cache de fichier (2011), de chaque fichier associé au flux de travail (106) ;
chaque fichier associé au flux de travail étant placé dans au moins un sous-système de cache de fichier (2011) selon les règles obtenues, pour l'exécution du flux de travail.

2. Procédé (100) selon la revendication 1, **caractérisé en ce que** les premières caractéristiques comprennent au moins l'une des caractéristiques suivantes :
- taille de fichier ;
- nombre d'opérations de flux de travail mises en oeuvre sur le fichier ;
- taille de bloc de données du fichier et/ou durée de l'opération et/ou type d'accès, pour des opérations de flux de travail de lecture et/ou d'écriture sur le fichier.

3. Procédé (100) selon l'une quelconque des revendications précédentes, **caractérisé en ce que** les secondes caractéristiques comprennent au moins l'une des caractéristiques suivantes : nombre d'opérations de flux de travail d'ouverture et/ou de fermeture, durée d'utilisation du fichier.

4. Procédé (100) selon l'une quelconque des revendications précédentes, **caractérisé en ce que**, si le flux de travail est associé à un modèle de cycle de vie de flux de travail, il comprend en outre une étape (107) de mise à jour du modèle de cycle de vie de flux de travail.

5. Procédé (100) selon l'une quelconque des revendications précédentes, **caractérisé en ce que** le modèle de cycle de vie de flux de travail est un réseau de neurones artificiels ou un encodeur.

6. Procédé (100) selon l'une quelconque des revendications précédentes, **caractérisé en ce que** la construction du modèle de cycle de vie de flux de travail est itérative.

7. Procédé (100) selon l'une quelconque des revendications précédentes, **caractérisé en ce que** le modèle d'optimisation est basé sur une optimisation sous contrainte.

8. Système (200) comprenant :
- Un système de calcul à haute performance (201) comportant au moins un noeud de calcul (2013) configuré pour exécuter des flux de travail de calcul haute performance, au moins un sous-système de cache de fichier (2011) et un sous-système de stockage (2012) configuré pour stocker des fichiers sur lesquels des flux de travail mettent en oeuvre des opérations ;
- Un ordinateur (202) configuré pour implémenter le procédé selon l'une quelconque des revendications précédentes.

9. Système selon la revendication 8, **caractérisé en ce que** l'ordinateur (202) est à côté du système de calcul à haute performance (201).

10. Produit programme d'ordinateur comprenant des instructions qui, lorsque le programme est exécuté par un ordinateur, amènent l'ordinateur à effectuer les étapes du procédé (100) selon l'une quelconque des revendications 1 à 7.
